# FASCICULE DE BREVET EUROPEEN

(11) **EP 3 282 563 B1**
(45) Date de publication et mention de la délivrance du brevet: **04.11.2020**
(21) Numéro de dépôt: 17184921.9
(22) Date de dépôt: 04.08.2017
(51) Int. Cl.: H02K 5/20, H02K 5/24, H02K 9/06

(54) **MOTEUR ÉLECTRIQUE COMPRENANT UN DISPOSITIF DE FORTE ATTÉNUATION ACOUSTIQUE**
ELEKTROMOTOR, DER EINE HOCH EFFIZIENTE SCHALLDÄMPFUNGSVORRICHTUNG UMFASST
ELECTRIC MOTOR COMPRISING A STRONG ACOUSTIC ATTENUATION DEVICE

(30) Priorité: 11.08.2016 FR 1657729
(43) Date de publication de la demande: 14.02.2018
(73) Titulaire: ALSTOM Transport Technologies, 93400 Saint-Ouen (FR)
(72) Inventeur: DUBOIS, Philippe, 25620 TREPOT (FR); KANIA, Xavier, 25290 SCEY-MAISIERES (FR); LOMBARD, Jean-Pierre, 25480 MISEREY-SALINES (FR)
(74) Mandataire: Lavoix

(56) Documents cités:
- EP-A1- 0 261 295
- EP-A2- 0 105 389
- WO-A2-01/11206
- CN-U- 201 563 022
- US-A1- 2010 223 751

## Description

La présente invention concerne un moteur électrique de traction pour véhicule ferroviaire, comprenant un dispositif d'atténuation acoustique.

L'optimisation des moteurs électriques conduit à des moteurs électriques toujours plus compacts et nécessitant un refroidissement efficace.

Le refroidissement est notamment réalisé par un ventilateur interne ou externe au moteur électrique agencé pour injecter de l'air de refroidissement dans le moteur afin de refroidir le stator et/ou le rotor du moteur. Pour augmenter l'efficacité du refroidissement il est possible d'augmenter la taille et/ou le débit du ventilateur.

Cependant, l'augmentation de la taille et/ou du débit du ventilateur augmente le niveau de bruit sonore émis par le moteur électrique alors que ce niveau doit être inférieur à un niveau de bruit de seuil prédéfini, afin de satisfaire la réglementation imposée par la législation du pays dans lequel le moteur électrique est employé.

Pour cette raison, il est connu d'utiliser un dispositif d'atténuation acoustique permettant de diminuer efficacement le niveau du bruit sonore émis par le moteur électrique.

De tels moteurs électriques comprenant un dispositif d'atténuation acoustique sont par exemple décrits dans les documents US 5,124,600 et US 4,150,313.

D'autres moteurs électriques de l'art antérieur équipés d'un dispositif d'atténuation acoustique sont également décrits dans les documents US2010/223751 A1, EP0261295A1, EP0105389A2 et CN201563022U.

Toutefois, l'architecture de tels moteurs électriques ne donne pas entière satisfaction. En effet, ces moteurs sont encombrants et leur dispositif d'atténuation acoustique rend compliqué une maintenance régulière des moteurs électriques.

L'un des buts de l'invention est de proposer un moteur électrique comprenant un dispositif d'atténuation acoustique étant peu encombrant et permettant une maintenance régulière facile.

A cet effet, l'invention a pour objet un moteur électrique selon la revendication 1.

Les avantages d'un tel moteur électrique sont multiples et sont résumés de manière non-exhaustive ci-dessous.

Le premier dispositif d'atténuation acoustique logé dans la deuxième ouverture du bâti du moteur électrique permet de garder sensiblement l'encombrement initial du moteur électrique. Ainsi, la taille du moteur électrique n'est pas augmentée par la présence du dispositif d'atténuation.

Le fait de fermer partiellement la deuxième ouverture permet de réguler le bruit sonore sortant du moteur électrique à un niveau prédéfini.

Avantageusement, le moteur électrique selon l'invention peut comprendre l'une ou plusieurs des caractéristiques des revendications 2 à 10.

L'invention sera mieux comprise à la lecture de la description qui va suivre, donnée uniquement à titre d'exemple et faite en se référant aux dessins sur lesquels :
- la figure 1 est une vue partielle en coupe le long de l'axe de rotation X du rotor d'un moteur électrique selon l'invention ;
- la figure 2 est une vue partielle en coupe selon un plan P1 perpendiculaire à l'axe de rotation X du rotor du moteur électrique de la figure 1;
- la figure 3 est une vue partielle en coupe selon un plan P1 perpendiculaire à l'axe de rotation X du rotor d'un mode de réalisation alternatif d'un moteur électrique selon l'invention ; et
- la figure 4 est une représentation schématique en perspective d'un dispositif d'atténuation acoustique des figures 1 à 3.

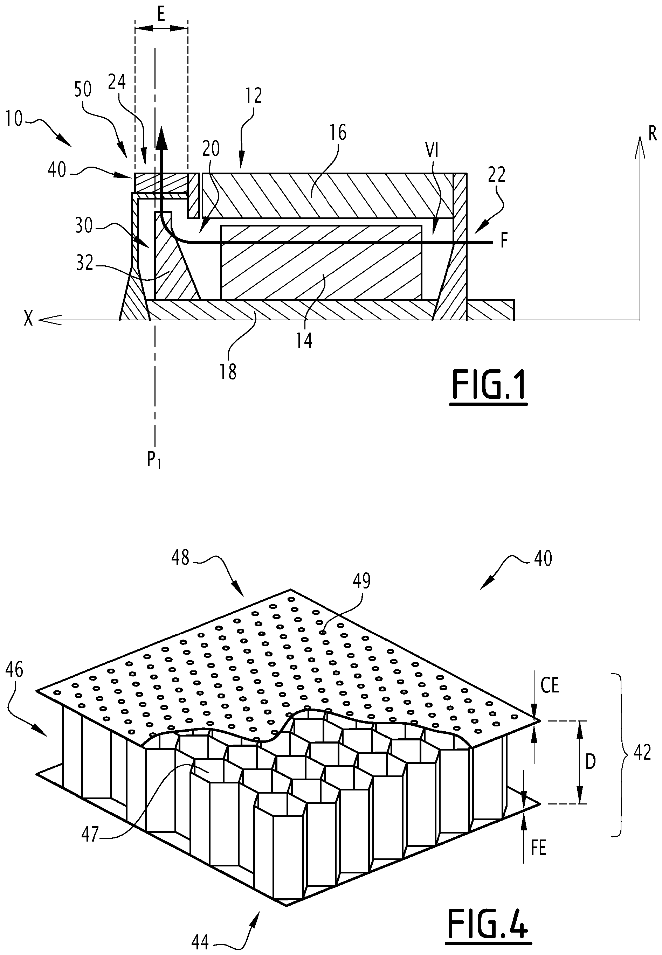

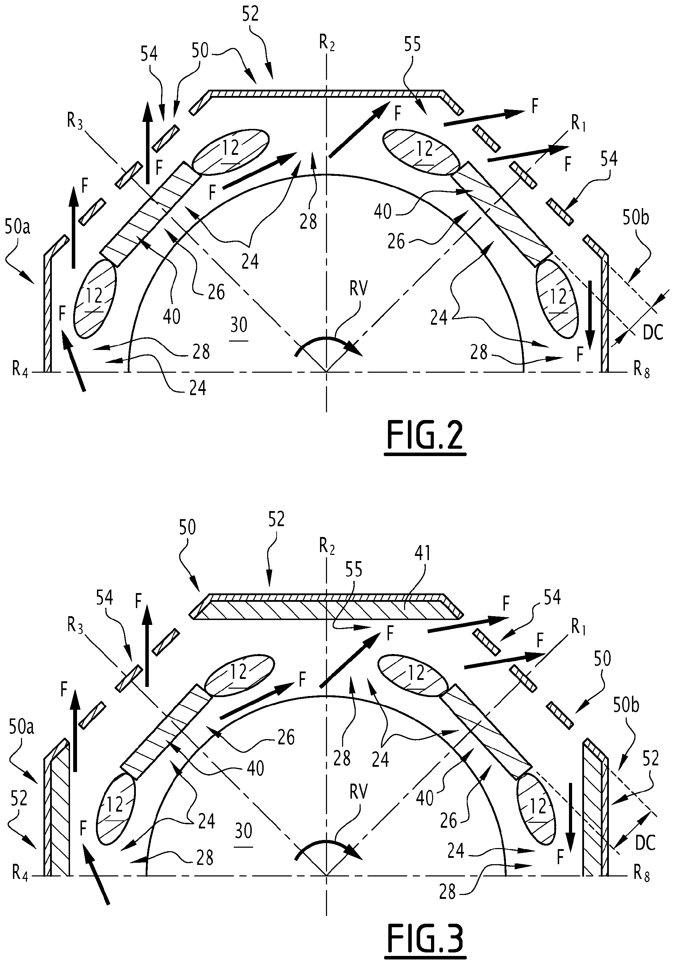

On a représenté, sur les figures 1 et 2, un moteur électrique 10 selon un premier mode de réalisation de l'invention. Le moteur électrique 10 comprend un bâti 12 définissant un volume interne VI dans lequel est logé un rotor 14 et un stator 16. Le rotor 14 est monté solidaire en rotation sur un arbre de rotation 18 à l'intérieur du bâti 12 et monté mobile en rotation autour d'un axe de rotation X par rapport au stator 16 et au bâti 12. Le stator 16 entoure le rotor 14 et est coaxial à celui-ci à l'intérieur du bâti 12. De façon classique, le rotor 14 et le stator 16 permettent de convertir une énergie électrique en une énergie mécanique délivrée par l'arbre 18 du rotor 14. Le fonctionnement d'un tel moteur est connu et ne sera pas décrit plus en détail ici.

Selon un mode de réalisation, le bâti 12 comprend une première ouverture 22 plaçant le volume interne VI du bâti 12 en communication fluidique avec l'extérieur du bâti 12. La première ouverture 22 est par exemple orientée selon un axe sensiblement parallèle à l'axe de rotation X.

Le bâti 12 comprend une deuxième ouverture 24 plaçant le volume interne VI du bâti 12 en communication fluidique avec l'extérieur du bâti 12 selon un axe radial R sensiblement perpendiculaire à l'axe de rotation X.

Le bâti 12 comprend un circuit de refroidissement 20 permettant de guider un flux F de fluide gazeux externe, par exemple l'air ambiant, depuis la première ouverture 22 à la deuxième ouverture 24.

Plus précisément, le circuit de refroidissement 20, représenté de manière schématique sur la figure 1, est agencé pour que le fluide gazeux externe provenant de l'extérieur du bâti 12 s'engouffre dans la première ouverture 22. Le fluide gazeux externe est guidé par le circuit de refroidissement 20 au travers du volume interne VI du bâti 12 pour refroidir par exemple le stator 16 en faisant passer le circuit de refroidissement 20 au travers et/ou autour du stator 16. La deuxième ouverture 24 permet finalement d'évacuer le fluide gazeux externe réchauffé vers l'extérieur du bâti 12. Ainsi, le bâti 12 et le stator 16 sont refroidis de manière efficace par l'air ambiant provenant de l'environnement du moteur 10.

La deuxième ouverture 24 comprend un premier dispositif d'atténuation acoustique 40 pour atténuer un bruit sonore. Le premier dispositif d'atténuation acoustique 40 sera décrit plus en détail par la suite.

La deuxième ouverture 24 est recouverte par un capotage 50. Le capotage 50 sera décrit plus en détail par la suite.

La deuxième ouverture 24 comprend au moins un premier passage 26 et un deuxième passage 28.

Le premier passage 26 s'étend selon un premier axe radial R1. Par radial, on entend un axe s'étendant dans un plan sensiblement perpendiculaire à l'axe de rotation X. Le premier passage 26 permet le passage du flux F de fluide gazeux entre le volume interne VI du bâti 12 et l'extérieur du bâti 12. Selon l'invention, le premier passage 26 est fermé par le premier dispositif d'atténuation acoustique 40.

Le deuxième passage 28 s'étend selon un deuxième axe radial R2 différent du premier axe radial R1. Le deuxième passage 28 permet également le passage du flux F de fluide gazeux entre le volume interne VI du bâti 12 et l'extérieur du bâti 12.

Dans le cas où la deuxième ouverture 24 comprend plus de deux premiers passages 26 et/ou plus de deux deuxièmes passages 28, chaque passage s'étend selon un axe radial différent.

Un tel exemple comprenant en total huit premier passages 26 et deuxièmes passages 28 avec des axes radiaux R1 à R8 respectifs est montré sur la figure 2 en coupe selon un plan P1 perpendiculaire à l'axe de rotation X du rotor.

Dans la présente description, les termes « amont » et « aval » sont définis par rapport au sens de circulation d'un flux F de fluide gazeux dans le moteur électrique 10.

L'arbre 18 du rotor 14 est équipé d'un ventilateur 30 comprenant au moins une pale 32 apte à créer le flux F de fluide gazeux dans le circuit de refroidissement 20 à l'intérieur du bâti 12. En d'autres termes, le ventilateur 30 est agencé pour promouvoir la circulation du fluide gazeux dans le circuit de refroidissement 20.

Le ventilateur 30 est disposé à proximité de la deuxième ouverture 24.

Le ventilateur 30 est mobile en rotation selon un sens de rotation RV. Le sens de rotation RV influence la direction du flux F de fluide gazeux circulant dans la périphérie du moteur 10 entre le bâti 12 et le capotage 50. Si le sens de rotation RV est inversé, la direction du flux F de fluide gazeux est également inversée. C'est-à-dire que, lorsque le sens de rotation RV du ventilateur 30 est dans le sens des aiguilles d'une montre, comme cela est montré sur la figure 2, le flux F circule sensiblement dans le sens des aiguilles d'une montre dans la périphérie du moteur 10 entre le bâti 12 et le capotage 50 et vice versa.

La direction du flux F de fluide gazeux dans le volume intérieur VI est indépendante de la rotation du ventilateur 30. C'est-à-dire que le fluide gazeux externe provenant de l'extérieur du bâti 12 s'engouffre dans la première ouverture 22 et est évacué par la deuxième ouverture 24.

L'exemple illustré sur la figure 2 montre un ventilateur 30 dont la rotation RV se fait dans le sens des aiguilles d'une montre et un flux F de fluide gazeux avec une orientation sensiblement perpendiculaire à l'axe de rotation X du ventilateur 30.

Le ou les pales 32 du ventilateur 30 sont par exemple situées en amont de la deuxième ouverture 24. Ainsi, un flux gazeux est créé à l'intérieur du bâti 12 grâce à l'aspiration d'un fluide gazeux depuis l'extérieur du moteur par la première ouverture 22 et par l'expulsion de ce fluide gazeux par la deuxième ouverture 24.

Le ventilateur 30 est par exemple un ventilateur centrifuge logé dans le volume interne du bâti 12 du moteur 10. L'utilisation d'un ventilateur centrifuge interne au bâti 12 permet de minimiser la taille du moteur électrique 10 par rapport à l'utilisation d'un ventilateur externe.

Le moteur électrique 10 comprend en outre au moins un premier dispositif d'atténuation acoustique 40 disposé au voisinage du ventilateur 30.

Le premier dispositif d'atténuation acoustique 40 est logé dans la deuxième ouverture 24. Ainsi, le premier dispositif d'atténuation acoustique 40 ferme partiellement la deuxième ouverture 24. Le premier dispositif d'atténuation acoustique 40 est fixé au bâti 12 par des moyens de fixation, par exemple des vis (non représentées). Ainsi, le premier dispositif d'atténuation acoustique 40 peut être démonté et monté facilement pendant une maintenance du moteur électrique 10.

Le premier dispositif d'atténuation acoustique 40 est logé dans le premier passage 26 pour complètement fermer ce premier passage 26. Dans ce cas, le deuxième passage 28 n'est pas fermé par le premier dispositif d'atténuation acoustique 40, comme le montre l'exemple sur la figure 2.

Le premier dispositif d'atténuation acoustique 40 est montré en détail sur la figure 4 et comprend au moins une structure multicouche 42 comprenant une couche de fond 44 sensiblement insonore. La couche de fond 44 est formée par exemple d'une tôle métallique, par exemple en inox. La couche de fond 44 présente par exemple une épaisseur FE sensiblement comprise entre 0.5 mm et 5 mm.

La structure multicouche 42 comprend au moins une couche de cavité 46 qui est appliquée sur la couche de fond 44. La couche de cavité 46 est formée par exemple par au moins un cylindre 47.

La base du cylindre 47 est en contact avec la couche de fond 44. Le cylindre 47 présente par exemple une base hexagonale. Le cylindre 47 peut être fabriqué en métal.

Le cylindre 47 s'étend selon un axe s'étendant de manière perpendiculaire à un plan défini par la couche de fond 44.

Le cylindre 47 s'étend sur une distance prédéfinie D, mesurée selon l'axe du cylindre, entre la couche de fond 44 et une première couche de passage sonore 48.

La distance prédéfinie D est par exemple comprise entre 5 mm et 100 mm.

Selon un mode de réalisation représenté sur la figure 4, la couche de cavité 46 est formée par plusieurs cylindres 47 adjacents pour former une couche de cavité en forme de nids d'abeille.

La première couche de passage sonore 48 est appliquée sur la couche de cavité 46 et comprend des micros trous 49. Les micros-trous 49 présentent par exemple un diamètre compris entre 0.5 mm et 5 mm.

La première couche de passage sonore 48 est parallèle à la couche de fond 44.

La première couche de passage sonore 48 est par exemple formée d'une tôle d'inox.

La première couche de passage sonore 48 présente une épaisseur CE par exemple comprise entre 0.5 mm et 5 mm.

La première couche de passage sonore 48 permet le passage du flux F d'un fluide gazeux au travers des micros-trous 49 à l'intérieur d'au moins un cylindre de la couche de cavité.

Avantageusement, le dispositif d'atténuation acoustique 40 est orienté de sorte que le flux F de fluide gazeux rencontre la première couche de passage sonore 48.

Selon un mode de réalisation, la première couche de passage sonore 48 est orientée vers le ventilateur 30, tandis que la couche de fond 44 est orientée vers l'extérieur du moteur.

Lorsque le flux F de fluide gazeux effleure ou pénètre la première couche de passage sonore 48, les ondes sonores émises par le fluide gazeux F passent par les micros-trous 49 de la première couche de passage sonore 48 pour pénétrer à l'intérieur de la couche de cavité 46.

A l'intérieur de la couche de cavité 46, les ondes sonores sont guidées par des parois du cylindre 47, sont réfléchies par la couche du fond 44, et l'interaction entre ondes guidées et réfléchies génère une atténuation selon le principe de Helmholtz.

Cette structure multicouche 42 correspond à un sandwich de type Helmholtz.

Ainsi, le bruit sonore produit par le rotor 14, le ventilateur 30 et par le champ magnétique créés lors de l'interaction du rotor 14 et du stator 16 peut être atténué par le dispositif d'atténuation acoustique 40 de manière efficace.

L'atténuation du bruit sonore du dispositif d'atténuation acoustique 40 est de l'ordre de 2 à 5 dB.

L'atténuation possible des fréquences acoustiques du bruit sonore est principalement comprise entre 0 et 2 kHz.

La couche de cavité permet d'atténuer une fréquence acoustique prédéfinie. La fréquence acoustique prédéfinie peut préalablement être choisie en fonction de la distance prédéfinie D entre la couche de fond et la première couche de passage sonore 48.

De manière alternative, la fréquence acoustique à atténuer peut être choisie en fonction du diamètre des micros trous 49, et/ou en fonction de l'épaisseur CE de la première couche de passage sonore 48.

Ainsi, le bruit sonore créé à l'intérieur du moteur électrique 10 passant par la deuxième ouverture 24 est atténué de manière efficace.

Le premier dispositif d'atténuation acoustique 40 est orienté de sorte que la première couche de passage sonore 48 est tournée vers le ventilateur 30. Le moteur électrique 10 comprend un capotage 50 pour protéger au moins la deuxième ouverture 24.

Le capotage 50 est fixé au moyen de vis (non-représentées) au bâti 12. Ainsi, le capotage 50 peut facilement être démonté et monté lors d'une maintenance du moteur électrique 10.

Le capotage 50 comprend au moins une zone insonore 52 et au moins une zone de passage de l'air 54.

Le capotage 50 et le bâti 12 forment un canal périphérique 55 pour le passage du flux F de fluide gazeux. Le canal périphérique 55 comporte une hauteur DC qui s'étend selon un axe radial R entre le bâti 12 et le capotage 50 et qui est comprise entre 20 mm et 100 mm.

Grâce au canal périphérique 55 le flux F de fluide gazeux peut circuler dans la périphérie du moteur 10 entre le bâti 12 et le capotage 50. La direction du flux F de fluide gazeux dans le canal périphérique 55 dépend du sens de rotation du ventilateur 30. C'est-à-dire qu'un sens de rotation du ventilateur 30, par exemple selon le sens de rotation des aiguilles d'une montre, entraine une direction du flux F de fluide gazeux sensiblement selon le sens de rotation des aiguilles d'une montre et vice versa dans le canal périphérique 55.

La zone insonore 52 du capotage 50 est placée en face du deuxième passage 28 lorsque le capotage 50 est fixé au bâti 12.

La zone insonore 52 s'étend dans un plan parallèle à l'axe de rotation X. La zone insonore 52 est par exemple formée par une tôle métallique, par exemple en acier inox ou d'un autre métal protégé contre la corrosion.

La zone insonore 52 permet de guider un flux F de fluide gazeux selon une direction parallèle à une surface définie par la zone insonore 52.

En d'autres termes, la zone insonore 52 bloque au moins partiellement le bruit sonore de provenance du volume intérieur VI du bâti 12, afin qu'il soit reflété sur la surface définie par la zone insonore 52.

La zone de passage de l'air 54 est placée en face du premier passage 26 lorsque le capotage 50 est fixé au bâti 12. La zone de passage de l'air 54 s'étend dans un plan parallèle à l'axe de rotation X. La zone de passage de l'air 54 est par exemple formée par une tôle métallique comportant des trous.

Les trous de la zone de passage de l'air 54 permettent au flux F de fluide gazeux de traverser la zone de passage de l'air 54 du capotage 50. En d'autres termes, le flux F de fluide gazeux de provenance du volume intérieur VI du bâti 12 peut passer par la zone de passage de l'air 54 du capotage 50 vers l'extérieur du moteur électrique 10.

Sur son chemin depuis le volume intérieur VI du bâti 12 vers l'extérieur, le flux F de fluide gazeux rencontre le premier dispositif d'atténuation acoustique 40 et/ou passe par le deuxième passage 28. Ensuite, le flux F rencontre la zone insonore 52 pour être guidé vers la zone de passage de l'air 54 vers l'extérieur. A la zone de passage de l'air 54 du capotage 50, le flux F de fluide gazeux traverse au moins en partie le passage de l'air 54 vers l'extérieur du moteur électrique 10.

Il est possible qu'au niveau de la zone de passage de l'air 54 du capotage 50, le flux F de fluide gazeux ne traverse pas au moins en partie le passage sonore 54 pour continuer dans le canal périphérique 55.

Ainsi, le chemin du flux F de fluide gazeux comprend au moins une chicane modifiant la direction du flux, comme cela est montré sur les figures 2 et 3.

Grâce à cette chicane formée par le premier dispositif d'atténuation acoustique 40 et la zone insonore 52, le bruit sonore sortant par la deuxième ouverture 24 est atténué de manière efficace.

Le capotage 50 est formé en au moins en deux pièces 50a et 50b agencée pour couvrir la deuxième ouverture 24. La première pièce 50a et la deuxième pièce 50b peuvent être démontées du bâti 12 indépendamment l'une de l'autre. Ceci permet un démontage partiel du capotage 50 pour accéder à l'intérieur du bâti 12 par la deuxième ouverture 24 lors d'une maintenance du moteur électrique 10. Ainsi, une maintenance du moteur électrique 10 devient plus facile comparée à une maintenance nécessitant un démontage complet du capotage 50 pour accéder à l'intérieur du bâti 12.

Le capotage 50 s'étend dans une direction parallèle à l'axe de rotation X sur une distance d'épaisseur E comprise entre 20 et 200 mm.

Avantageusement, le capotage 50 ne dépasse pas les dimensions radiales du bâti 12 du moteur électrique 10. Ainsi, le moteur électrique 10 garde une taille compacte.

Selon un mode de réalisation alternatif, combinable avec le mode de réalisation précité, le premier dispositif d'atténuation acoustique 40 comprend une structure multicouche 42 dont la couche de fond 44 est une deuxième couche de passage sonore. La deuxième couche de passage sonore est identique à la première couche de passage sonore 48.

Ce premier dispositif d'atténuation acoustique 40 comporte donc une couche de cavité 46 interposée entre deux couches de passage sonore.

Ainsi, du fait que la zone de passage de l'air 54 est placée en face du premier dispositif d'atténuation acoustique 40, le flux F de fluide gazeux peut, au moins en partie, effleurer ou affronter la deuxième couche de passage sonore avant de passer par la zone de passage de l'air 54 du capotage 50.

Dans le cas où le flux F de fluide gazeux effleure ou pénètre la deuxième couche de passage, les ondes sonores produite par le flux F de fluide gazeux entrent dans la couche de cavité 46 du premier dispositif d'atténuation acoustique 40 par les trous de la deuxième couche de passage sonore.

Ensuite, ces ondes sont atténuées par la couche de cavité 46 selon le principe de Helmholtz.

Par conséquent, le bruit sonore est atténué à nouveau par le premier dispositif d'atténuation acoustique 40. L'atténuation du bruit sonore est alors accrue.

Dans une variante combinable avec le mode de réalisation précité et représentée à la figure 3, la zone insonore 52 comprend un deuxième dispositif d'atténuation acoustique 41. Le deuxième dispositif d'atténuation acoustique 41 peut comprendre la même structure que le premier dispositif d'atténuation acoustique 40.

Le deuxième dispositif d'atténuation acoustique 41 comprend par exemple une couche de fond 44 insonore et une couche de passage sonore 48. Dans ce cas, la première couche de passage sonore 48 du deuxième dispositif d'atténuation acoustique 41 est orientée vers le ventilateur 30.

Grâce au deuxième dispositif d'atténuation acoustique 41 l'atténuation du bruit sonore sortant de la deuxième ouverture 24 est améliorée.

Dans un mode de réalisation comportant plusieurs premiers passages 26 et au moins un deuxième passage 28, il est possible de prévoir plusieurs premiers passages 26 adjacents dans un secteur radial défini entre un premier axe radial et un deuxième axe radial différent du premier axe radial. Ainsi, le bruit sonore émit par le moteur électrique 10 dans ce secteur radial est diminué.

Dans une variante ne faisant pas partie de l'invention, le dispositif d'atténuation acoustique 40 est logé dans le deuxième passage 28 et le premier passage 26 est dépourvu d'un dispositif d'atténuation acoustique 40.

Dans encore une autre variante ne faisant pas partie de l'invention, le dispositif d'atténuation acoustique 40 est logé partiellement dans le premier passage 26 et partiellement dans le deuxième passage 28.

Selon un mode de réalisation alternative combinable avec ceux décrit précédemment, la structure multicouche 42 comprend plusieurs couches de cavité 46 superposées comportant une plaque perforée ou une membrane entre chaque couche de cavité 46. Dans ce cas, il est possible d'atténuer le bruit dans une gamme de fréquences.

Il est possible d'orienter la première ouverture 22 selon une direction perpendiculaire à l'axe de rotation X. Dans ce cas, il est possible d'appliquer l'enseignement décrit précédemment relatif au dispositif d'atténuation acoustique à la première ouverture 22.

## Revendications

1. Moteur (10) électrique, comprenant :
- un bâti (12) définissant un volume interne (VI) dans lequel est logé un rotor (14), un stator (16) et un ventilateur (30), le bâti (12) comprenant
• une première ouverture (22) plaçant le volume interne (VI) du bâti (12) en communication fluidique avec l'extérieur du bâti (12),
• une deuxième ouverture (24) plaçant le volume interne (VI) du bâti (12) en communication fluidique avec l'extérieur du bâti (12) selon un axe radial (R) sensiblement perpendiculaire à un axe de rotation (X) du rotor,
- le ventilateur (30) étant disposé à proximité de la deuxième ouverture (24) et étant configuré pour créer un flux (F) d'un fluide gazeux, et dans lequel
un premier dispositif d'atténuation acoustique (40) est logé dans la deuxième ouverture (24) de sorte à partiellement fermer la deuxième ouverture (24),
la deuxième ouverture (24) comprend au moins un premier passage (26) et un deuxième passage (28), le premier passage (26) et le deuxième passage (28) permettant le passage du flux de fluide gazeux entre le volume interne (VI) et l'extérieur du bâti (12), le premier passage (26) et le deuxième passage (28) étant définis par le bâti (12), le premier passage (26) étant fermé par le premier dispositif d'atténuation acoustique (40) logé dans ledit premier passage (26),
un capotage (50) est placé en face de la deuxième ouverture (24), le capotage (50) ayant au moins une zone insonore (52) placée en face du deuxième passage (28) et au moins une zone de passage de l'air (54) placée en face du premier passage (26),
le premier passage (26) s'étendant selon un premier axe radial (R1), le deuxième passage (28) s'étendant selon un deuxième axe radial (R2) différent du premier axe radial (R1), les premier et deuxième axes radiaux (R1, R2) s'étendant dans un plan sensiblement perpendiculaire à l'axe de rotation (X),
le premier passage (26) et le deuxième passage (28) étant disposés circonférentiellement autour de l'axe de rotation (X),
le capotage (50) et le bâti (12) formant un canal périphérique (55) pour le passage du fluide gazeux.

2. Moteur (10) selon la revendication 1, dans lequel le ventilateur (30) est un ventilateur centrifuge.

3. Moteur (10) selon les revendications 1 ou 2, dans lequel la zone insonore (52) du capotage (50) comprend un second dispositif d'atténuation acoustique (41).

4. Moteur (10) selon la revendication 3, dans lequel le premier et deuxième dispositif d'atténuation acoustique (40, 41) présente au moins une structure multicouche (42) comprenant une couche de fond (44), au moins une couche de cavité (46) appliquée sur la couche de fond (44) et une première couche de passage sonore (48) appliquée sur la couche de cavité (46).

5. Moteur (10) selon la revendication 4, dans lequel la couche de cavité (46) est formée par au moins un cylindre (47) de base hexagonale s'étendant sur une distance prédéfinie (D) entre la couche de fond (44) et la première couche de passage sonore (48).

6. Moteur (10) selon les revendications 4 ou 5, dans lequel la structure multicouche (42) comprend plusieurs couches de cavité (46) superposées.

7. Moteur (10) selon l'une des revendications 4 à 6, dans lequel la première couche de passage sonore (48) est formée d'une tôle métallique comportant des micros-trous (49).

8. Moteur (10) selon l'une des revendications 4 à 7, dans lequel la couche de fond (44) est sensiblement insonore et formée par une tôle métallique fermée.

9. Moteur (10) selon l'une quelconque des revendications 1 à 7, dans lequel le premier dispositif d'atténuation acoustique (40) comprend une structure multicouche (42) comprenant une couche de fond (44) qui est une deuxième couche de passage sonore.

10. Moteur (10) selon la revendication 9, dans lequel le capotage (50) est formé en au moins deux pièces (50a, 50b) configurées pour couvrir partiellement la deuxième ouverture (24).

## Patentansprüche

1. Elektro-Motor (10) mit:
- einem Gehäuse (12), das ein Innenvolumen (VI) definiert, in welchem ein Rotor (14), ein Stator (16) und ein Lüfter (30) untergebracht ist, wobei das Gehäuse (12) aufweist:
• eine erste Öffnung (22), die das Innenvolumen (VI) des Gehäuses (12) in Fluidkommunikation mit dem Äußeren des Gehäuses (12) setzt,
• eine zweite Öffnung (24), die das Innenvolumen (VI) des Gehäuses (12) in Fluidkommunikation mit dem Äußeren des Gehäuses (12) setzt entlang einer Radialachse (R) im Wesentlichen senkrecht zu einer Rotationsachse (X) des Rotors,
- wobei der Lüfter (30) in der Nähe der zweiten Öffnung (24) angeordnet ist und konfiguriert ist, um einen Strom (F) eines gasförmigen Fluid zu erzeugen, und wobei
eine erste Akustikdämpfungsvorrichtung (40) in der zweiten Öffnung (24) untergebracht ist, um die zweite Öffnung (24) teilweise zu schließen,
wobei die zweite Öffnung (24) wenigstens eine erste Passage (26) und eine zweite Passage (28) aufweist, wobei die erste Passage (26) und die zweite Passage (28) das Passieren des Stroms gasförmigen Fluid zwischen dem Innenvolumen (VI) und dem Äußeren des Gehäuses (12) erlauben, wobei die erste Passage (26) und die zweite Passage (28) von dem Gehäuse (12) definiert sind, wobei die erste Passage (26) von der ersten Akustikdämpfungsvorrichtung (40) verschlossen ist, die in der ersten Passage (26) untergebracht ist,
wobei eine Verkleidung (50) gegenüber der zweiten Öffnung (24) angeordnet ist, wobei die Verkleidung (50) wenigstens einen schallschluckenden Bereich (52), der gegenüber der zweiten Passage (28) angeordnet ist, und wenigstens einen Luftpassagenbereich (54) aufweist, der gegenüber der ersten Passage (26) angeordnet ist,
wobei die erste Passage (26) sich entlang einer ersten Radialachse (R1) erstreckt, wobei die zweite Passage (28) sich entlang einer zweiten Radialachse (R2) erstreckt, die von der ersten Radialachse (R1) verschieden ist, wobei die erste und die zweite Radialachse (R1, R2) sich in einer Ebene erstrecken, die im Wesentlichen senkrecht zur Rotationsachse (X) ist,
wobei die erste Passage (26) und die zweite Passage (28) umfänglich um die Rotationsachse (X) herum angeordnet sind,
wobei die Verkleidung (50) und das Gehäuse (12) einen peripheren Kanal (55) für das Passieren des gasförmigen Fluid bilden.

2. Motor (10) gemäß Anspruch 1, wobei der Lüfter (30) ein Zentrifugallüfter ist.

3. Motor (10) gemäß den Ansprüchen 1 oder 2, wobei der schallschluckende Bereich (52) der Verkleidung (50) eine zweite Akustikdämpfungsvorrichtung (41) aufweist.

4. Motor (10) gemäß Anspruch 3, wobei die erste und die zweite Akustikdämpfungsvorrichtung (40, 41) wenigstens eine Mehrschichtstruktur (42) haben, die aufweist eine Bodenschicht (44), wenigstens eine Kavitätsschicht (46), die auf die Bodenschicht (44) aufgebracht ist, und eine erste Schallpassierschicht (48), die auf die Kavitätsschicht (46) aufgebracht ist.

5. Motor (10) gemäß Anspruch 4, wobei die Kavitätsschicht (46) durch wenigstens einen Zylinder (47) auf hexagonaler Basis gebildet ist, der sich über eine vordefinierte Distanz (D) erstreckt zwischen der Bodenschicht (44) und der ersten Schallpassierschicht (48).

6. Motor (10) gemäß den Ansprüchen 4 oder 5, wobei die Mehrschichtstruktur (42) mehrere überlagerte Kavitätsschichten (46) aufweist.

7. Motor (10) gemäß einem der Ansprüche 4 bis 6, wobei die erste Schallpassierschicht (48) von einem Metallblech gebildet ist, das Mikrolöcher (49) aufweist.

8. Motor (10) gemäß einem der Ansprüche 4 bis 7, wobei die Bodenschicht (44) im Wesentlichen schalldicht ist und von einem geschlossenen Metallblech gebildet ist.

9. Motor (10) gemäß irgendeinem der Ansprüche 1 bis 7, wobei die erste Akustikdämpfungsvorrichtung (40) eine Mehrschichtstruktur (42) aufweist, die eine Bodenschicht (44) aufweist, die eine zweite Schallpassierschicht ist.

10. Motor (10) gemäß Anspruch 9, wobei die Verkleidung (50) aus zumindest zweite Stücken (50a, 50b) gebildet ist, die konfiguriert sind zum teilweisen Abdecken der zweiten Öffnung (24) .

## Claims

1. An electric motor (10), comprising:
- a frame (12) defining an inner space (VI) in which a rotor (14), a stator (16) and a fan (30) are housed, the frame (12) comprising:
- a first opening (22) placing the inner space (VI) of the frame (12) in fluid communication with the outside of the frame (12),
- a second opening (24) placing the inner space (VI) of the frame (12) in fluid communication with the outside of the frame (12) along a radial axis (R) substantially perpendicular to a rotation axis (X) of the rotor,
- the fan (30) being arranged near the second opening (24) and being configured to create a flow (F) of a gaseous fluid,
in which a first acoustic attenuation device (40) is housed in the second opening (24) so as to partially close the second opening (24),
the second opening (24) comprises at least a first passage (26) and a second passage (28) for the passage of the gaseous fluid, the first passage (26) and the second passage (28) allowing the circulation of the gaseous fluid between the inner space (VI) and the outside of the frame (12), the first passage (26) and the second passage (28) being defined by the frame (12), the first passage (26) being closed by the first acoustic attenuation device (40) housed in said first passage (26),
a cover (50) is placed across from the second opening (24), the cover (50) having at least one soundproofing area (52) placed opposite the second passage (28) and at least one air passage area (54) placed opposite the first passage (26),
the first passage (26) extending along a first radial axis (R1), the second passage (28) extending along a second radial axis (R2) distinct from the first radial axis (R1), the first and the second radial axis (R1, R2) extending in a plane substantially perpendicular to the rotation axis (X),
the first passage (26) and the second passage (28) being circumferentially arranged around the rotation axis (X),
the cover and the frame forming a peripheral channel (55) for the circulation of the gaseous fluid.

2. The motor (10) according to claim 1, wherein the fan (30) is a centrifugal fan.

3. The motor (10) according to claims 1 or 2, wherein the soundproofing area (52) of the cover (50) comprises a second acoustic attenuation device (41).

4. The motor (10) according to claim 3, wherein the first and second acoustic attenuation devices (40, 41) have at least one multilayer structure (42) comprising a bottom layer (44), at least one cavity layer (46) applied on the bottom layer (44) and a first sound passage layer (48) applied on the cavity layer (46).

5. The motor (10) according to claim 4, wherein the cavity layer (46) is formed by at least one cylinder (47) with a hexagonal base extending over a predefined distance (D) between the bottom layer (44) and the first sound passage layer (48).

6. The motor (10) according to claims 4 or 5, wherein the multilayer structure (42) comprises several superimposed cavity layers (46).

7. Motor (10) according to one of claims 4 to 6, wherein the first sound passage layer (48) is formed by a metal sheet including micro-holes (49).

8. The motor (10) according to one of claims 4 to 7, wherein the bottom layer (44) is substantially soundproof and formed by a closed metal sheet.

9. The motor (10) according to any one of claims 1 to 7, wherein the first acoustic attenuation device (40) comprises a multilayer structure (42) comprising a bottom layer (44) that is a second sound passage layer.

10. The motor (10) according to claim 9, wherein the cover (50) is made from at least two parts (50a, 50b) configured to partially cover the second opening (24).
